# EUROPEAN PATENT APPLICATION

(11) **EP 4 708 044 A1**
(43) Date of publication of application: **11.03.2026**
(21) Application number: 25173388.7
(22) Date of filing: 29.04.2025
(51) Int. Cl.: G06F 9/451, G06F 3/048

(54) **APPLICATION DISPLAY METHOD AND APPARATUS, ELECTRONIC DEVICE AND STORAGE MEDIUM**

(30) Priority: 06.09.2024 CN 202411253056
(71) Applicant: Beijing Xiaomi Mobile Software Co., Ltd., Beijing 100085 (CN)
(72) Inventor: GUO, Bin, Beijing, 100085 (CN); LIU, Chan, Beijing, 100085 (CN); PAN, Wen, Beijing, 100085 (CN)
(74) Representative: Dehns Germany Partnerschaft mbB

(57) **Abstract**

A method and apparatus for displaying a target application across one or more devices is disclosed. The method includes determining a functional module within the target application running on a first device, where the module comprises one or more pages. A transfer parameter and a configuration parameter of the functional module are parsed. The transfer parameter identifies the target device-either the first device or a second device-for display of the module, while the configuration parameter defines display-related information. Based on the transfer parameter, the functional module is selectively transferred to and laid out on the determined target device. The system supports flexible multi-device display scenarios, including fixed, sequential, exclusive, or terminal transfer modes, enabling adaptive rendering of application modules across heterogeneous devices.

## Description

### TECHNICAL FIELD

The present disclosure relates to the technical field of computer software, and in particular, to an application display method and apparatus, an electronic device and a storage medium.

### BACKGROUND

With the development of electronic devices, people's demand for the interconnection and interoperability of electronic devices is increasingly growing, as shown in the following scenarios. For example, before the user gets home, the user uses an electronic device to watch a video. After arriving home, the video playback page of the video application is automatically transferred to a target electronic device, and at this moment, the electronic device used by the user displays a video control page. For example, before the user gets home, the user watches a shopping live broadcast on an electronic device. After arriving home, the live broadcast page of the application is transferred to a target electronic device. The user may browse the product list or product details page on the electronic device while watching the live broadcast, and make payments on the electronic device after selecting the product.

### SUMMARY

The present disclosure provides an application display method and apparatus, an electronic device and a storage medium.

According to a first aspect of the embodiments of the present disclosure, an application display method is provided, and the method includes: determining a functional module included in a target application running on a first device, where the functional module includes one or more pages; parsing a transfer parameter and a configuration parameter of the functional module, where the configuration parameter is used to represent display information of the functional module on a display screen of a corresponding device, and the transfer parameter is used to determine a target device to which the functional module is transferred correspondingly, where the target device includes the first device and/or a second device different from the first device; determining the target device to which the functional module is transferred correspondingly based on the transfer parameter of the functional module, and transferring the functional module to the target device; and laying out the functional module on the target device to which the functional module is transferred correspondingly based on the configuration parameter of the functional module, and displaying the page in the functional module.

According to a second aspect of the embodiments of the present disclosure, an application display apparatus is provided and the apparatus includes: a determination unit, configured to: determine a functional module included in a target application running on a first device, where the functional module includes one or more pages; and determine a target device to which the functional module is transferred correspondingly based on a transfer parameter of the functional module and transfer the functional module to the target device; a parsing unit, configured to parse the transfer parameter and a configuration parameter of the functional module, where the configuration parameter is used to represent display information of the functional module on a display screen of a corresponding device, and the transfer parameter is used to determine the target device to which the functional module is transferred correspondingly, where the target device includes the first device and/or a second device different from the first device; and a display unit, configured to lay out the functional module on the target device to which the functional module is transferred correspondingly based on the configuration parameter of the functional module, and display the page in the functional module.

According to a third aspect of an embodiment of the present disclosure, an electronic device is provided and the electronic device includes: a processor; and a memory, configured to store instructions executable by the processor; where the processor is configured to execute the application display method as described in the first aspect or any one of the embodiments in the first aspect.

According to a fourth aspect of an embodiment of the present disclosure, a storage medium is provided, where instructions are stored in the storage medium, and when the instructions in the storage medium are executed by a processor, enable the processor to execute the application display method as described in the first aspect or any one of the embodiments in the first aspect.

It should be understood that the foregoing general description and the following detailed description are exemplary and explanatory only and do not limit the present disclosure.

### BRIEF DESCRIPTION OF THE DRAWINGS

The accompanying drawings herein, which are incorporated into and constitute a part of the specification, illustrate embodiments consistent with the present disclosure and are used in conjunction with the specification to explain principles of the present disclosure.
FIG. 1 is a schematic diagram of an application component shown according to an exemplary embodiment.
FIG. 2 is a flowchart of an application display method shown according to an exemplary embodiment.
FIG. 3 is a schematic diagram of a functional module of an application shown according to an exemplary embodiment.
FIG. 4 is a schematic diagram of an application form shown according to an exemplary embodiment.
FIG. 5 is a schematic diagram of transfer of a functional module shown according to an exemplary embodiment.
FIG. 6 is a schematic diagram of transfer of a functional module shown according to an exemplary embodiment.
FIG. 7 is a schematic diagram of a parameter shown according to an exemplary embodiment.
FIG. 8 is a schematic diagram of a parameter shown according to an exemplary embodiment.
FIG. 9 is a schematic diagram of a parameter shown according to an exemplary embodiment.
FIG. 10 is a flowchart of a layout algorithm method shown according to an exemplary embodiment.
FIG. 11 is a schematic diagram of a screen type shown according to an exemplary embodiment.
FIG. 12 is a schematic diagram of a functional module shown according to an exemplary embodiment.
FIG. 13 is a schematic diagram of an application layout shown according to an exemplary embodiment.
FIG. 14 is a schematic diagram of an application layout shown according to an exemplary embodiment.
FIG. 15 is a schematic diagram of an application layout shown according to an exemplary embodiment.
FIG. 16 is a schematic diagram of an application display method shown according to an exemplary embodiment.
FIG. 17 is an architecture diagram of an application shown according to an exemplary embodiment.
FIG. 18 is a schematic diagram of a distribution of a functional module shown according to an exemplary embodiment.
FIG. 19 is a block diagram of an application display apparatus shown according to an exemplary embodiment.
FIG. 20 is a block diagram for an application display apparatus shown according to an exemplary embodiment.
FIG. 21 is a block diagram for an application display apparatus shown according to an exemplary embodiment.

### DETAILED DESCRIPTION

Exemplary embodiments will be described in detail herein, examples of which are represented in the accompanying drawings. When the following description relates to the accompanying drawings, the same numerals in different accompanying drawings represent the same or similar elements unless otherwise indicated. The implementations described in the following exemplary embodiments do not represent all implementations consistent with the embodiments of the present disclosure.

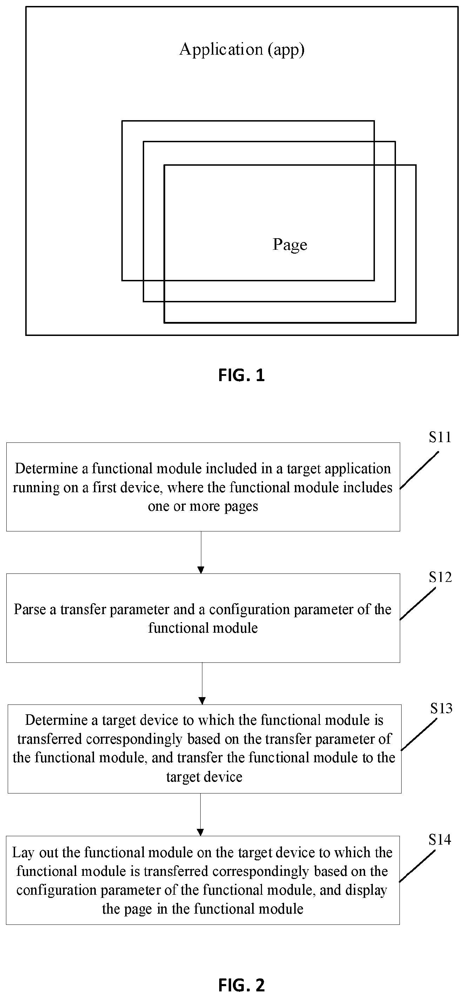

In the related art, a user interface (UI) usually includes page components as shown in FIG. 1. FIG. 1 is a schematic diagram of application components shown according to an exemplary embodiment. As shown in FIG. 1, the application includes a plurality of page components. In the related art, application transfer usually involves two devices, and when the application is being transferred, generally, a UI element is selected by the user for the transfer or automatically selected through parsing a newly added tag, where the transfer may be understood as migrating the running application from one device to another. A general UI layout method is used so that the application may be transferred to a device of the same type, but the application layout cannot self-adapt to different device types. Alternatively, in the related art, a single device is supported, but the requirement that an application is able to run collaboratively among a plurality of devices cannot be supported, and how to make the same set of codes adapt to different devices is not considered.

However, how to lay out a part of modules of the application on the target electronic device to obtain a good experience is a technical problem that still needs to be solved.

In the embodiments of the present disclosure, page components are also referred to as pages. In the embodiments of the present disclosure, page components and pages are often used interchangeably, and those skilled in the art should understand their consistency.

In view of this, the application display method provided in the present disclosure implements a method for multiple devices to collaboratively run the same application.

In the embodiments of the present disclosure, application display is performed based on the functional module (aspect). A functional module is a module that includes pages of the same type in the target application. It is mainly applied to scenarios where the functional module is distributed and transferred, and laid out among different devices, which facilitates developers to conduct multi-terminal deployment through a single development, and enables the splitting and combination of the application based on relevant attributes of the functional module.

FIG. 2 is a flowchart of an application display method shown according to an exemplary embodiment. As shown in FIG. 2, the method includes steps S11 to S14.

In step S11, a functional module included in a target application running on a first device is determined, where the functional module includes one or more pages.

In the embodiments of the present disclosure, the first device may be understood as a device that first opens and runs the target application among a plurality of devices. The target application includes a functional module (aspect), and the target application supports displaying a plurality of pages. It may be understood that pages of the same functional type among multiple pages belong to a same functional page. The target application may include a plurality of functional modules with different functions. In the embodiments of the present disclosure, the functional module serves as the basic unit of application transfer.

In the embodiments of the present disclosure, the screen of the device may include a plurality of functional modules, and each functional module may include one or more pages. When a functional module is displayed on the screen of the device, one of the pages of the functional module is displayed, and content on a complete screen is formed based on one or more functional modules. For example, the target application displayed on the screen of the device currently has two functional modules: a menu bar and a content area. Each module occupies a different area, and one of the pages of the functional module thereof is displayed in the corresponding module area.

In step S12, a transfer parameter and a configuration parameter of the functional module are parsed.

In the embodiments of the present disclosure, the functional module is configured with a transfer parameter and a configuration parameter. After determining the functional module included in the target application running on the first device, the transfer parameter and the configuration parameter of the functional module are parsed. The transfer parameter is used to determine a device to transfer and display the functional module. Based on the transfer parameter pre-configured for the functional module, a matched device in the transfer parameter is determined to transfer the functional module. The configuration parameter is used to represent the display information of the functional module on the display screen of the corresponding device.

In the embodiments of the present disclosure, pages belonging to the same functional module are displayed on the same device. The plurality of devices include a first device and/or one or more second devices different from the first device. For example, they may include a first device, or a first device and one second device, or a first device and multiple second devices. The first device is a device that first opens the target application, and the one or more second devices different from the first device are devices in the same local area network as the first device, or devices that meet other preset condition.

In step S13, a target device to which the functional module is transferred correspondingly is determined based on the transfer parameter of the functional module, and the functional module is transferred to the target device.

In the embodiments of the present disclosure, in response to the first device running the target application, after determining the functional module included in the target application, a plurality of devices for displaying the functional module are determined according to the determined functional module. It may be understood that based on the functional module determined to be distributed to other devices, the functional module is distributed to the plurality of devices according to the transfer parameter of the functional module, and displayed on the plurality of devices. Since one functional module includes multiple pages of the same function type, the pages in the corresponding functional module may be displayed on the determined devices.

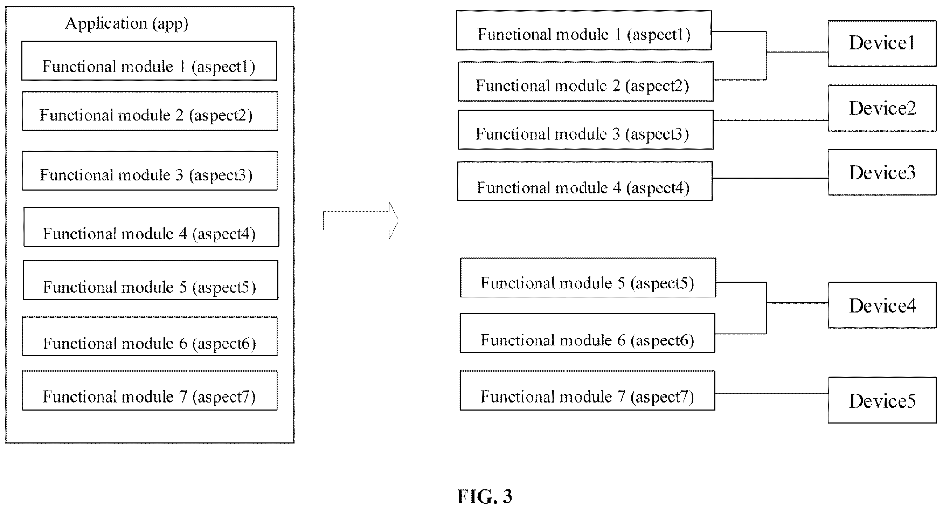

Exemplarily, as shown in FIG. 3, FIG. 3 is a schematic diagram of functional modules of an application shown according to an exemplary embodiment. In the same application, pages with the same function may be placed in one functional module, for example, a functional module 1 (aspect 1), a functional module 2 (aspect 2), a functional module 3 (aspect 3), a functional module 4 (aspect 4), a functional module 5 (aspect 5), a functional module 6 (aspect 6) and a functional module 7 (aspect 7) as shown in FIG. 3. The target device to which the functional module 1 and the functional module 2 may be transferred is device 1. The target device to which the functional module 3 may be transferred is device 2. The target device to which the functional module 4 may be transferred is device 3. The target device to which the functional module 5 and the functional module 6 may be transferred is device 4. The target device to which the functional module 7 may be transferred is device 5.

In step S14, the functional module is laid out on the corresponding target device based on the configuration parameter of the functional module, and the page in the functional module is displayed.

In the embodiments of the present disclosure, in addition to the transfer parameter used for distribution to devices, the functional module is also provided with the configuration parameter for representing the display information of the functional module on the display screen of the corresponding device. The position of the functional module is calculated based on the configuration parameter of the functional module to set the functional module on the display screen of the device to ensure the maximum benefit of the functional module.

In the embodiments of the present disclosure, a plurality of devices for displaying the functional modules are determined according to the determined functional modules, and the pages in the corresponding functional modules are displayed on the determined devices. The display of the page of the corresponding function on a determined device may be triggered by the user, or may be automatically triggered by a newly added second device without the participation of the user, or may be authorized by the user when displaying the page in the corresponding functional module for the first time.

In the embodiments of the present disclosure, a plurality of devices for displaying the functional modules are determined based on the determined functional modules, and pages of the corresponding functional modules are displayed on the determined devices, which realizes the separability and combinability of the target application, thereby allowing the user to use the same application on different devices and experience different functions of the same application on different devices, which facilitates the user to obtain a good user experience.

In the embodiments of the present disclosure, the following method may be adopted to determine a plurality of devices for displaying functional modules according to the determined functional modules.

In the embodiments of the present disclosure, the target application includes a plurality of functional modules, each functional module corresponds to a different function, and different parameters are configured for each functional module so that the page in the functional module is transferred to a device corresponding to the parameter.

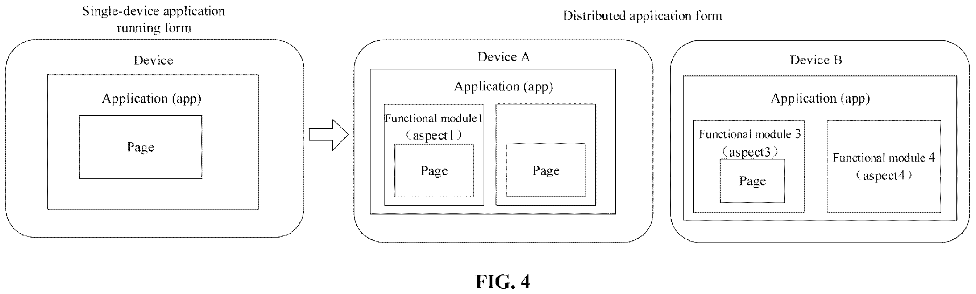

Exemplarily, FIG. 4 is a schematic diagram of an application form shown according to an exemplary embodiment. As shown in FIG. 4, the single-device application running form may be that when the device opens the application, the application displays a page. In the case of multiple devices, the application of the device A includes the functional module 1 and the functional module 2, and the functional module 1 and the functional module 2 respectively include a page. The application of the device B includes the functional module 3 and the functional module 4, and the functional module 3 may include a page.

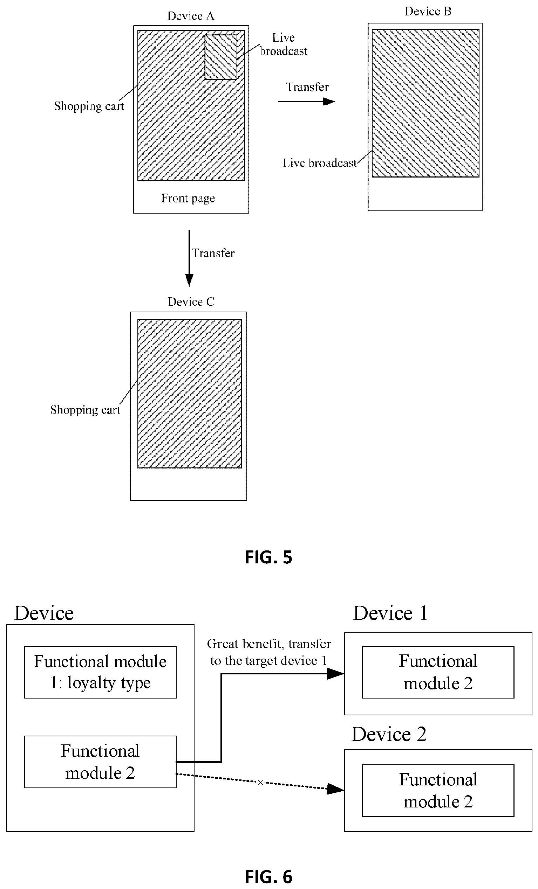

Exemplarily, the transfer of functional modules to multiple devices is illustrated with reference to FIG. 5. FIG. 5 is a schematic diagram of transfer of functional modules shown according to an exemplary embodiment. As shown in FIG. 5, the first device may be a device A, and the target application currently opened by the device A includes a front page module, a shopping cart module, and a live broadcast module. The three modules implement different functions. Based on the transfer parameter of the live broadcast module, the live broadcast module is transferred to a device B, and the live broadcast module of the target application is displayed on the device B. The shopping cart module of the target application is transferred to a device C based on the transfer parameter of the shopping cart module, and the shopping cart module of the target application is displayed on the device C. It may be understood that both the device B and the device C display a part of the target application opened on the device A.

In the embodiments of the present disclosure, the parameters of the determined functional modules are obtained according to the determined functional modules, multiple devices for displaying the functional modules are determined according to the transfer parameters, and the pages in the corresponding functional modules are displayed on the determined devices. It may be understood that after multiple devices for displaying the functional module are determined according to the transfer parameters, and the pages in the corresponding functional modules are displayed on the determined devices, each device has part of the functions of the target application, and multiple devices together form a complete application. The same functional module on different devices should be consistent in forming a distributed application.

In the embodiments of the present disclosure, based on the transfer parameters corresponding to the functional modules, multiple devices for displaying the functional modules may be determined to facilitate automatic transfer of the functional modules between the devices. The devices may be matched based on the transfer parameters of the functional modules to enhance the users' ability to use different functions of the same target application on different devices.

In the embodiments of the present disclosure, the determined parameters of the functional module may include at least one of the following: a first parameter, a second parameter, a third parameter, and a fourth parameter.

In the embodiments of the present disclosure, the functional module supports a personality attribute, which may specify a specific transfer of the functional module and a distribution mode of the transfer to the devices.

In the embodiments of the present disclosure, the first parameter may be understood as a loyalty type (Loyalty), which represents that the page in the functional module is not transferred to the second device for display, and remains displayed on the first device.

In the embodiments of the present disclosure, a functional module provided with the first parameter facilitates maintaining display on the first device, thereby avoiding interruption of the user's workflow and improving the user experience.

In the embodiments of the present disclosure, the second parameter may be understood as a following type (Follow), which represents that the page in the functional module is transferred and displayed following the second device to which the previous functional module has been transferred and displayed, and the target application corresponds to a plurality of functional modules that are arranged in sequence for transfer and display.

Exemplarily, the transfer of functional modules to multiple devices is illustrated with reference to FIG. 6. FIG. 6 is a schematic diagram of transfer of functional modules shown according to an exemplary embodiment. As shown in FIG. 6, if the personality attribute of the functional module 1 is the loyalty type (Loyalty), the current functional module is not transferred to the second device for display, and remains displayed on the first device. If the personality attribute of the functional module 2 is not configured, the target device to which the functional module 2 is transferred may be determined based on the principle of maximizing benefits. For example, the current functional module may be transferred to the device 1 and the device 2. Based on the principle of maximizing benefits, it may be known that the display effect of the current functional module on the device 1 is better than that on the device 2, so the current functional module may be transferred to the device 1 and displayed on the device 1.

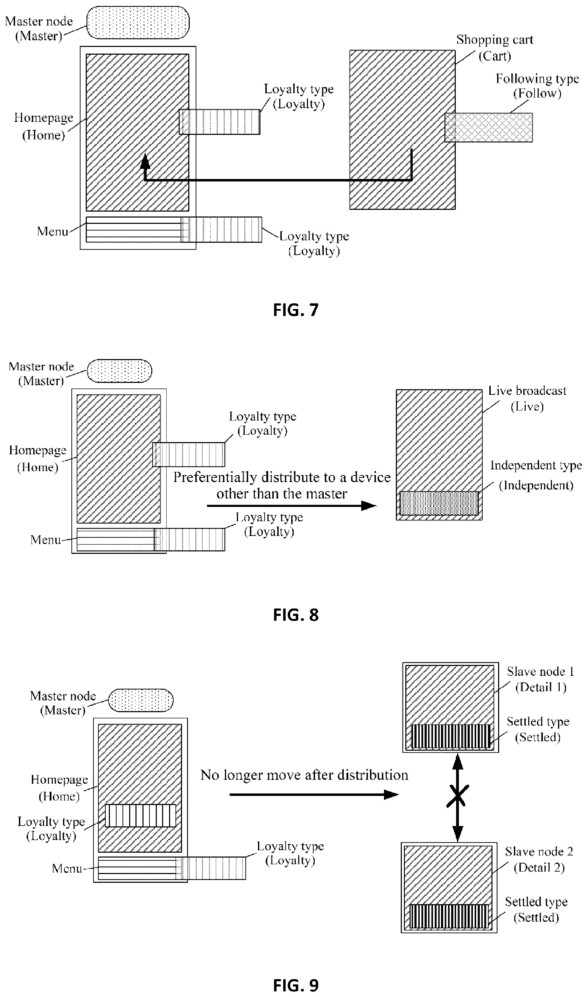

Exemplarily, the first parameter and the second parameter are illustrated with reference to FIG. 7. FIG. 7 is a schematic diagram of parameters shown according to an exemplary embodiment. As shown in FIG. 7, for the first parameter, the target application opened on the first device includes a menu module and a homepage (Home) module. The first device in FIG. 7 may be a master node (Master) device. The parameters of the Menu functional module and the Home functional module may be set as the first parameter, which represents that the Menu functional module and the Home functional module will not be transferred to a second device different from the first device when a new device is added or when the user triggers the transfer of the functional modules. As shown in FIG. 7, for the second parameter, the shopping cart (Cart) functional module is set to "Follow", which represents that the Cart functional module is of a following type, and may be transferred together with the previous functional module when being transferred according to the previous functional module in the application configuration file (app-manifest) configuration. The previous functional module is a previous module of the functional modules set as "Follow" in a preset sequence table of functional modules.

In the embodiments of the present disclosure, the functional module provided with the second parameter can optimize cross-device collaboration and improve user experience.

In the embodiments of the present disclosure, the third parameter may be understood as an independent type (Independent), which represents that the second device is selected to display the transferred page in the functional module, and another device different from the first device is preferentially selected and exclusively occupied to a greatest extent, e.g., it may be another device such as the second device.

Exemplarily, the third parameter is described with reference to FIG. 8. FIG. 8 is a schematic diagram of parameters shown according to an exemplary embodiment. As shown in FIG. 8, the live functional module is set as "Independent". When the Master detects the second device, the Live functional module will be preferentially distributed to a device other than the Master. Here, the "preferentially" may be understood as a device in devices other than the master node device on which the display effect of the Live module on the screen is the best.

In the embodiments of the present disclosure, the functional module provided with the third parameter allows the user to transfer the page in the functional module to the second device that is different from the first device for display, which provides the user with more choices and flexibility. The page transfer between different devices is realized and the interoperability between devices is enhanced.

In the embodiments of the present disclosure, the fourth parameter may be understood as a settled type (Settled), which represents that the page in the functional module is transferred to the second device for display and is no longer transferred to other device.

Exemplarily, the fourth parameter is described with reference to FIG. 9. FIG. 9 is a schematic diagram of parameters shown according to an exemplary embodiment. As shown in FIG. 9, for the second device, for example, the detail page (Detail1) functional module of the slave node 1 is set to "Settled". When a new device, for example, a slave subordinate 2 joins in, the Detail module is still on the device in the upper right part of FIG. 9, and will not be transferred to the other newly added device.

In the embodiments of the present disclosure, different parameters are set for the functional modules, and a plurality of devices for displaying the functional modules are determined according to the parameters. It enables different functional modules of the target application to be automatically transferred and run on the plurality of devices to conduct collaborative cooperation, thereby improving the user experience.

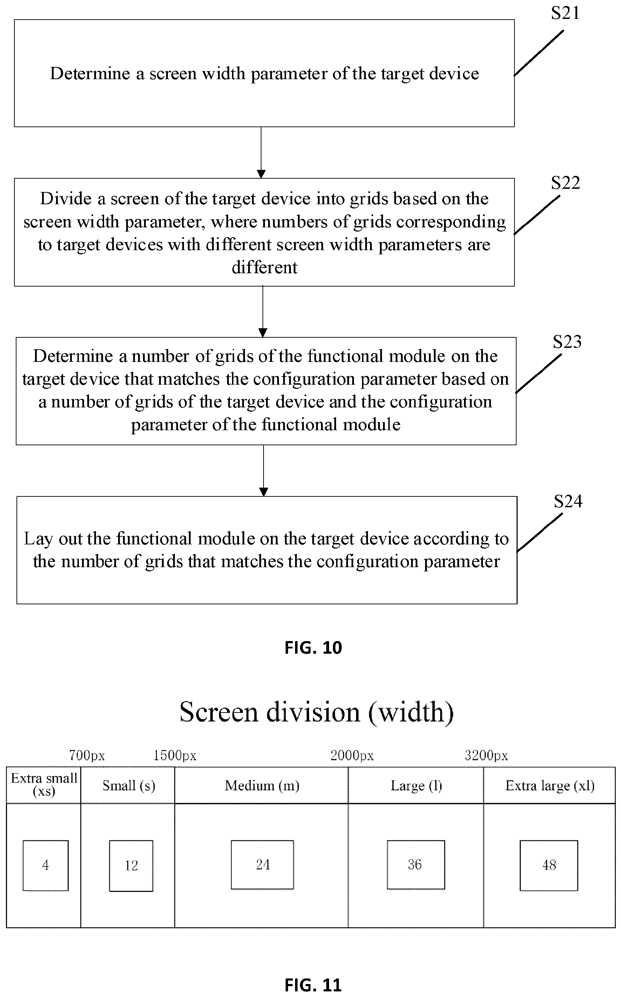

In the embodiments of the present disclosure, after the functional modules with different functions are allocated to multiple devices according to parameters, it is necessary to display the multiple functional modules on the devices. FIG. 10 is a flowchart of a layout algorithm method shown according to an exemplary embodiment. As shown in FIG. 10, steps S21 to S24 are included.

In step S21, a screen width parameter of the target device is determined.

In the embodiments of the present disclosure, the target device has different screen sizes, and the screen size of the target device is determined based on the screen width parameter. Exemplarily, FIG. 11 is a schematic diagram of screen types shown according to an exemplary embodiment. The height parameter and the width parameter are described with reference to FIG. 11. The target device may include the following five screen sizes: extra small (xs), small (s), medium (m), large (l), and extra large (xl).

In step S22, the screen of the target device is divided into grids based on the screen width parameter, where numbers of grids corresponding to target devices with different screen width parameters are different.

In the embodiments of the present disclosure, for screens of different sizes, the screen width parameter is used as a reference to divide the screen of the target device into grids. It may be understood that the number of grids corresponding to target devices with different screen width parameters is different. For example, the "xs" screen corresponds to 4 grids, the "s" screen corresponds to 12 grids, the "m" screen corresponds to 24 grids, the "s" screen corresponds to 36 grids, and the "xl" screen corresponds to 48 grids. The developer may set different numbers of grids for different devices on which the functional modules run, to adapt to screens of different sizes.

In step S23, the number of grids of the functional module on the target device that matches the configuration parameter is determined based on the number of grids of the target device and the configuration parameter of the functional module.

In the embodiments of the present disclosure, the configuration parameter of the functional module is preset with the number of grids as a unit. Based on the number of grids of the target device and the configuration parameter of the functional module, the number of grids of the module on the target device that matches the configuration parameter may be determined. For example, one of the configuration parameters of the functional module 1 occupies two grids on the target device of size "s", or, one of the configuration parameters of the functional module 1 occupies one grid on the target device of size "1".

In step S24, the functional module is laid out on the target device according to the number of grids that matches the configuration parameter.

In the embodiments of the present disclosure, the functional modules may be laid out on the target device according to the number of grids that matches different target devices and different configuration parameters. It may be understood that the configuration parameters use grids as unit, and different target devices correspond to different numbers of grids. That is, the functional modules on different devices have different sizes due to the different numbers of grids occupied by the configuration parameters.

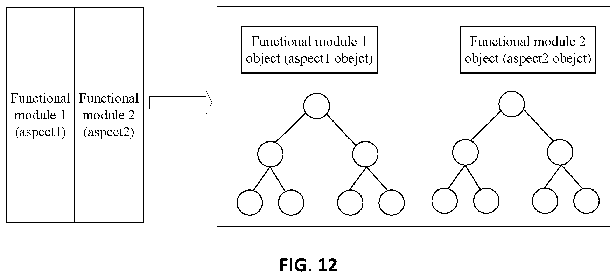

In the embodiments of the present disclosure, after the functional modules with different functions are distributed to multiple devices according to parameters, it is necessary to lay out the display of the multiple functional modules on the devices. FIG. 12 is a schematic diagram of functional modules shown according to an exemplary embodiment. As shown in FIG. 12, a functional module 1 (aspect1) and a functional module 2 (aspect2) are included, and multiple document object model (DOM) trees are applied, such as a functional module 1 object (aspect1 object), a functional module 2 object (aspect2 object), where each functional module may be regarded as a DOM tree, and normal interface rendering may be performed for the functional module in the page based on the DOM tree. The position calculation of the functional modules on multiple devices may be achieved through a layout algorithm. It may be understood that the interface rendering is normal inside the functional module. Distributed applications need to adapt to a plurality of types of devices and support the transfer of functional modules among different devices. When different functional modules are distributed to run in collaboration on multiple devices, it is necessary to lay out the functional modules for either a single-device scenario or a multi-device scenario before the function modules continue to run on the devices.

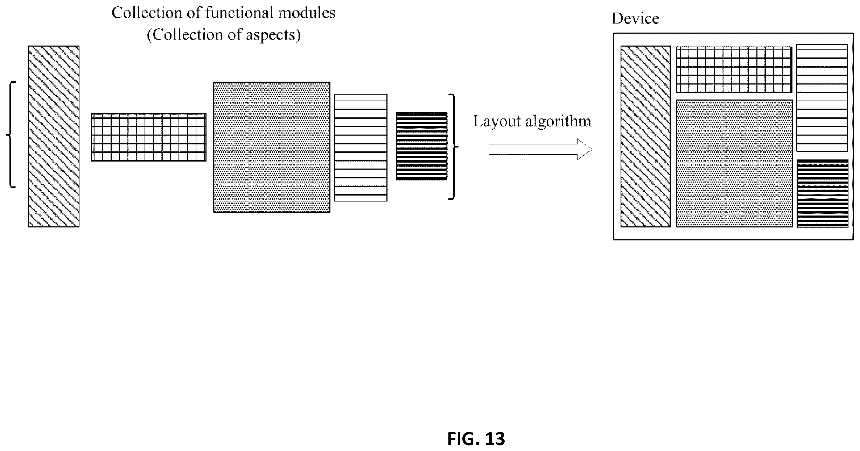

In the embodiments of the present disclosure, based on the configuration parameter of the functional module, the page in the corresponding functional module is displayed on the determined device. For example, as shown in FIG. 13, FIG. 13 is a schematic diagram of an application layout shown according to an exemplary embodiment. As shown in FIG. 13, five functional modules of different sizes are included. Based on the configuration parameters of the functional modules, the five functional modules of different sizes can be reasonably distributed on the determined device to display the pages of the corresponding functional modules.

In the embodiments of the present disclosure, based on the number of grids of the target device and the configuration parameter of the functional module, the number of grids of the functional module on the target device that matches the configuration parameter is determined, thus the layout on the target device can be achieved based on the number of grids. Since the sizes of the functional modules on different devices are different, appropriate flexibility can also be achieved by adapting the functional module to target devices with different screen sizes.

In the embodiments of the present disclosure, the configuration parameter is described. The configuration parameter includes a width parameter, a height parameter, an area position parameter, a sequential layout parameter and a custom parameter. The width parameter (Width) is used to represent the width information of the functional module, and the height parameter (Height) is used to represent the height information of the functional module. It may be understood that the number of grids of the display screen occupied by the width information and the height information on different devices is different. For the number of grids of the display screen occupied by the width information on different devices being different, it may be understood that when the functional module is displayed on a device with a screen size of "s", the width information of the current functional module uses grids as the unit on the display screen, and occupies two grids on the device with the screen size of "s". The height information of the functional module is adjusted based on the width information on a determined device based on the width information of the functional module.

In the embodiments of the present disclosure, the area position parameter in the configuration parameter is illustrated. The area position parameter is used to represent the position of the functional module on the display screen. The area position parameter includes a left area (left), a right area (right), a top area (top), a bottom area (bottom), and a full screen area (fullScreen). Based on the area position parameter of the functional module, the position of the functional module on the display screen may be specified. For example, if it is specified as left, the functional module is in the left area of the display screen.

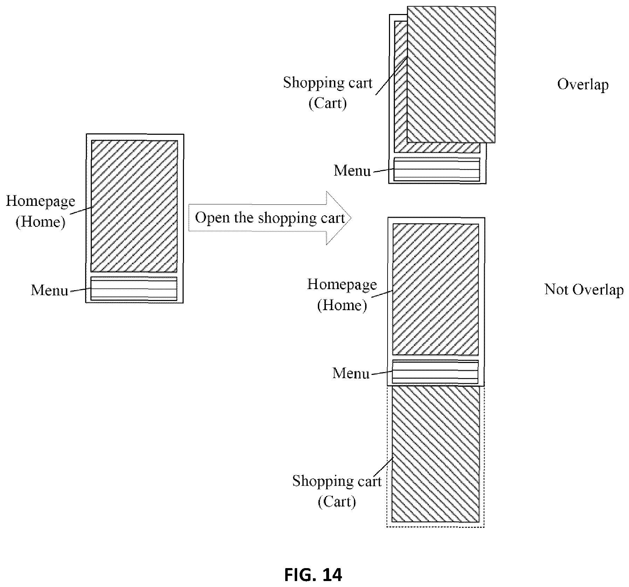

In the embodiments of the present disclosure, the sequential layout parameter (isOrder) is used to determine whether to perform layout in a preset order. The sequential layout parameter is illustrated with reference to FIG. 14, which is a schematic diagram of an application layout shown according to an exemplary embodiment. As shown in FIG. 14, the current application page displays a menu (Menu) and a home page (Home). If the user chooses to define a sequential parameter, when the user clicks the shopping cart (Cart), the Cart page may be overlapped on the Home for sequential display. If the user does not choose to define the sequential parameter, when the user clicks Cart, the overlapped display is not performed. Through the sequential layout parameter that supports superimposing functional modules, it can be achieved that when the functional modules cannot be placed on one screen, the functional modules are placed in an overlay manner. It is convenient for the developer to achieve the consistent display effect of the functional module on a signal device through a simple configuration, and the functional module can easily be expanded to multiple devices for collaborative operation.

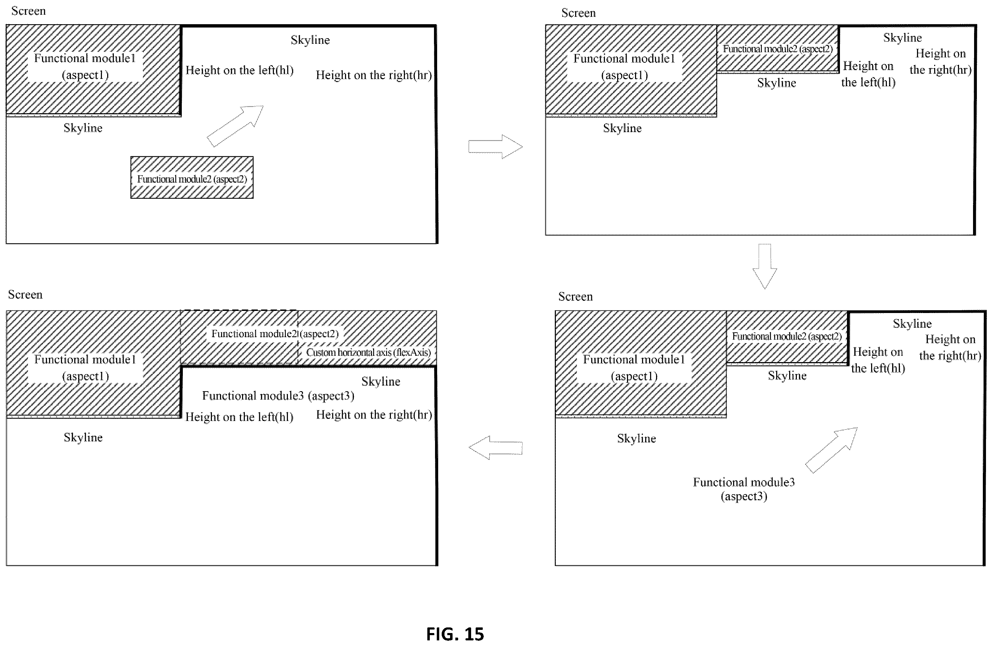

In the embodiments of the present disclosure, the self-adaptive parameter is used to determine whether the functional module is adaptive to the screen. The self-adaptive parameter includes a custom horizontal axis (flexAxis) and a custom vertical axis (flexCross), and the remaining space on the screen is self-adaptively allocated by setting the flexAxis and flexCross. The custom parameter is described with reference to FIG. 15. FIG. 15 is a schematic diagram of an application layout shown according to an exemplary embodiment. As shown in FIG. 15, the functional module 1 is displayed on the device. When the functional module 2 is received, the functional module 2 is displayed on the screen based on the configuration parameter of the functional module 2 and the height on the left (hightleft, hl) and height on the right (hightright, hr) of the screen itself, and it is ensured that it does not exceed the skyline(Skyline) of the screen. In response to the functional module 3 being displayed on the screen, since the blank position on the right side of the functional module 2 cannot accommodate the functional module 3, the functional module 3 is placed below the functional module 2 and to the right of the functional module 1 based on the configuration parameter of the functional module 3. At the same time, the functional module 2 is self-adaptively changed according to the self-adaptive parameter of the functional module 2 to fill the blank area of the right half of the functional module 2.

In the embodiments of the present disclosure, the configuration parameter includes the width parameter, the height parameter, the area position parameter, the sequential layout parameter, and the self-adaptive parameter. The developer may specify the area occupied by the functional module through the area position parameter. The width parameter and the height parameter are the occupied grids size. The developer may also choose whether to allocate the remaining grids of the display screen height within the specified area, which may be identified by 0 and 1. For example, 0 means no allocation, and 1 means allocation.

In the embodiments of the present disclosure, based on specifying the width parameter, height parameter and area position parameter of the grids occupied by the functional modules under each type of display screen, the UI layout will automatically place the functional modules on the display screen according to the configuration parameter, and appropriately adjust the size of the functional modules elastically to perfectly adapt to devices with different types of screens.

In the embodiments of the present disclosure, in response to detecting that the configuration parameter includes the sequential layout parameter, the functional modules are firstly laid out on the target device according to the number of grids that matches the configuration parameter in the order preset by the sequential layout parameter.

In the embodiments of the present disclosure, based on whether the configuration parameter includes the sequential layout parameter, a flexible layout of the functional modules can be achieved. The functional modules may be laid out in a preset order based on the sequential layout parameter, or the functional modules may be laid out in accordance with other configuration parameters when the sequential layout parameter is not included.

In the embodiments of the present disclosure, in response to the configuration parameter not including the sequential layout parameter and the configuration parameter including the area position parameter, for example, the area position parameter of a specified functional module being top, the functional module determines the position of the functional module on the screen of the target device based on the width parameter, height parameter, area position parameter and self-adaptive parameter on the determined device, and layouts the function at the position according to the number of grids that matches the configuration parameter.

In the embodiments of the present disclosure, the configuration parameter does not include the sequential layout parameter, and the configuration parameter includes the area position parameter, so that the position of the functional module on the screen of the target device may be determined based on the area position of the functional module and other configuration parameters of the functional module, which increases the flexibility of the layout of the functional module, optimizes the interface layout of the target device, and improves the user experience.

In the embodiments of the present disclosure, in response to detecting that the configuration parameters do not include the sequential layout parameter and the configuration parameter does not include the area position parameter, the position of the functional module on the screen of the target device is determined directly based on the width parameter, the height parameter and the self-adaptive parameter, and the functional module is laid out at the position according to the number of grids that matches the configuration parameter.

In the embodiments of the present disclosure, the functional module is self-adaptively displayed on the target device based on the configuration parameter, so that the functional module can be adapted to different devices, and the configuration of self-adaptive allocation of the remaining space is supported to realize the flexible layout of the functional modules on the target device.

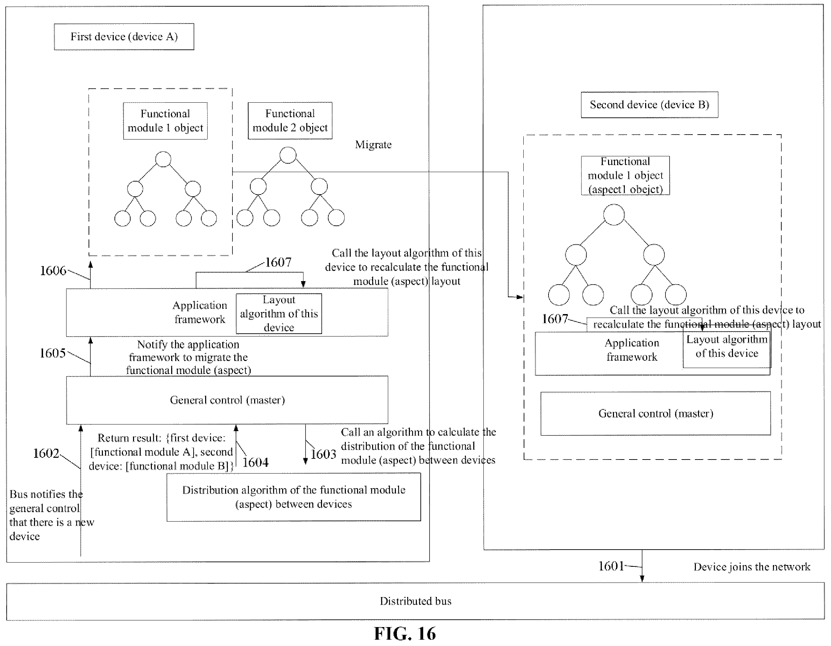

An embodiment of the present disclosure hereinafter describes the application display method with reference to FIG. 16. FIG. 16 is a schematic diagram of an application display method shown according to an exemplary embodiment.

In the embodiment of the present disclosure, in response to at least one second device being close to the first device in the same local area network, the distributed bus detects that the second device has joined the network (Step 1601), and the distributed bus notifies the general control of the first device that a new device has joined (Step 1602). The general control of the first device receives the information that the second device has joined, calls an algorithm to calculate the distribution of functional modules between the devices (Step 1603), and determines that different functional modules are distributed to the second device (Step 1604). Exemplarily, the functional module 1 may be distributed to the second device, and functional module 2 is still on the first device. Based on the distribution result of the general control, the application framework is notified by the general control (Step 1605), and then the application framework migrates the functional module 1 to the second device (Step 1606). After the second device receives the functional module 1, the first device and the second device call the device layout algorithm to recalculate the layout of the functional modules (Step 1607). In the embodiment of the present disclosure, in response to the absence of a second device in the same local area network, when the first device opens the application, the layout algorithm of the device may display the functional modules to the user after reasonable layout based on different device models before displaying the functional modules to the user.

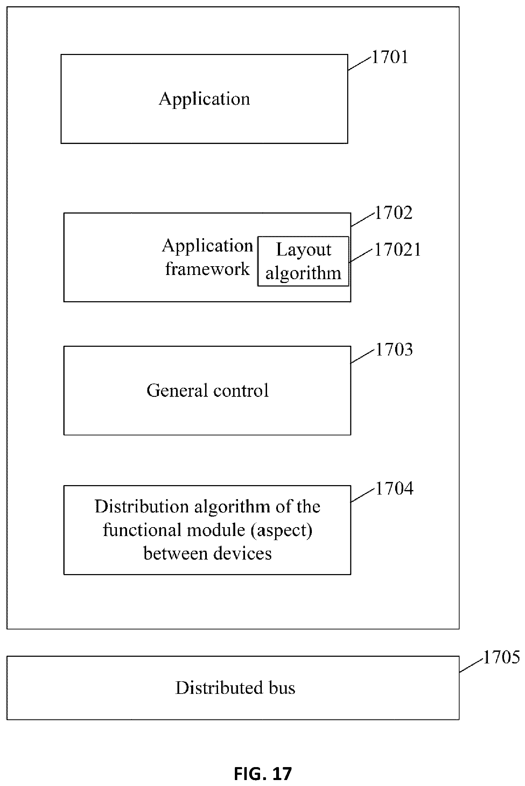

In the embodiment of the present disclosure, an architecture diagram as shown in FIG. 17 may be provided. FIG. 17 is an architecture diagram of an application 1701 shown according to an exemplary embodiment. As shown in FIG. 17, an application 1701, an application framework 1702, a general control 1703, an aspect distribution algorithm between devices (functional module (aspect) distribution algorithm between devices) 1704, and a distributed bus 1705 are included. The application framework 1702 includes a layout algorithm 17021, and the aspect distribution algorithm between devices 1703 may be called by the general control.

In the embodiments of the present disclosure, the parameters of the functional module are obtained, and multiple devices for displaying the functional modules are determined according to the parameters. A hierarchical structure is used for design, which is convenient for the developer to adapt, and the automatic transfer of functional modules is realized. The parameters include a first parameter, a second parameter, a third parameter and a fourth parameter, and the transfer of the functional modules to the determined devices is realized based on the above parameters. The configuration parameter of the functional module is obtained, and the page in the corresponding functional module is displayed on the determined device based on the configuration parameter, where the configuration parameter includes a width parameter, a height parameter, an area position parameter, a sequential layout parameter and a self-adaptive parameter. The developer can achieve the consistent display effect on a single device and can easily expand the function modules to multiple devices for collaborative operation through a simple configuration.

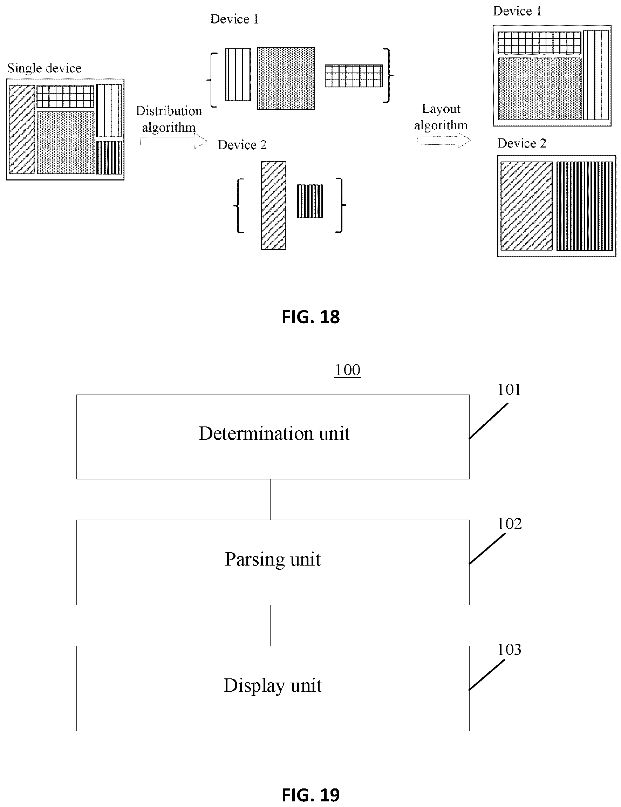

In the embodiments of the present disclosure, the display effect of the application display method may refer to FIG. 18, which is a schematic diagram of functional modules distribution shown according to an exemplary embodiment. As shown in FIG. 18, there are five functional modules. Based on the distribution algorithm, three of the functional modules may be transferred to the device 1, and two of the modules may be transferred to the device 2. Based on the layout algorithm, the three functional modules in the device 1 are reasonably displayed, and the two functional modules in the device 2 are reasonably displayed to achieve the best display effect.

In the embodiments of the present disclosure, based on the multi-device application layout of the functional modules, the layout on a single device, the distribution and layout on multiple devices of the application are realized, which enables the developer, by implementing a single set of code, to allow the user to experience that the application can be separated and combined between devices, and obtain a better experience. It is realized that a single set of application codes can be adapted to different types of electronic devices. When the application running in a distributed mode is implemented, it supports a plurality of devices. Each device may implement part of the functions of the application, and the plurality of devices together form a complete application, that is, a distributed application. It enriches the application forms, eliminates the need for manual operations by users, and improves the user's experience.

Based on the same concept, an embodiment of the present disclosure further provides an application display apparatus 100.

It may be understood that, in order to achieve the above-mentioned functions, the application display apparatus 100 provided in the embodiments of the present disclosure includes the corresponding hardware structures and/or software modules for executing various functions. With reference to the units and algorithm steps of the examples disclosed in the embodiments of the present disclosure, the embodiments of the present disclosure can be implemented in the form of hardware or a combination of hardware and computer software. Whether a certain function is executed in the form of hardware or in the way that computer software drives the hardware depends on the specific application and design constraints of the technical solution. Those skilled in the art can use different methods for each specific application to implement the described functions, but such implementation should not be regarded as going beyond the scope of the technical solutions of the embodiments of the present disclosure.

FIG. 19 is a block diagram of an application display apparatus shown according to an exemplary embodiment. Referring to FIG. 19, the apparatus includes a determination unit 101, a parsing unit 102 and a display unit 103.

The determination unit 101 is configured to determine a functional module included in a target application running on a first device, where the functional module includes one or more pages; and the determination module is configured to determine a target device to which the functional module is transferred correspondingly based on a transfer parameter of the functional module and transfer the functional module to the target device.

The parsing unit 102 is configured to parse the transfer parameter and a configuration parameter of the functional module, where the configuration parameter is used to represent display information of the functional module on a display screen of a corresponding device, and the transfer parameter is used to determine the target device to which the functional module is transferred correspondingly, where the target device includes the first device and/or a second device different from the first device.

The display unit 103 is configured to lay out the functional module on the target device to which the functional module is transferred correspondingly based on the configuration parameter of the functional module, and display the page in the functional module.

In an embodiment, the determination unit determines the target device to which the functional module is transferred correspondingly based on the transfer parameter of the functional module in the following manner: in response to the transfer parameter being a first parameter, the first parameter representing that the page in the functional module remains displayed on the first device and is not transferred to a device other than the first device for display, determining the first device as the target device.

In an embodiment, the determination unit determines the target device to which the functional module is transferred correspondingly based on the transfer parameter of the functional module in the following manner: in response to the transfer parameter being a second parameter, the second parameter representing that the page in the functional module is transferred and displayed following a device to which a previously transferred and displayed functional module is transferred, determining a device to which a most recently transferred functional module in the target application is transferred as the target device, where the target application corresponds to a plurality of functional modules arranged in sequence for transfer and display.

In an embodiment, the determination unit determines the target device to which the functional module is transferred correspondingly based on the transfer parameter of the functional module in the following manner: in response to the transfer parameter being a third parameter, the third parameter representing that the page in the functional module is preferentially transferred to another device for transfer and display, and exclusively occupies the transferred device, selecting the second device different from the first device as the target device.

In an embodiment, the determination unit determines the target device to which the functional module is transferred correspondingly based on the transfer parameter of the functional module in the following manner: in response to the transfer parameter being a fourth parameter, the fourth parameter representing that the page in the functional module is transferred to another device for display and no longer continues to be transferred, selecting the second device different from the first device as the target device.

In an embodiment, the display unit lays out the functional module on the target device to which the functional module is transferred correspondingly based on the configuration parameter of the functional module in the following manner: determining a screen width parameter of the target device; dividing a screen of the target device into grids based on the screen width parameter, where numbers of grids corresponding to target devices with different screen width parameters are different; determining a number of grids of the functional module on the target device that matches the configuration parameter based on a number of grids of the target device and the configuration parameter of the functional module, where the configuration parameter of the functional module includes a preset number of grids; and laying out the functional module on the target device according to the number of grids that matches the configuration parameter.

In an embodiment, the configuration parameter includes at least one of following parameters: a width parameter, where the width parameter is used to represent width information of the functional module, and a number of screen grids occupied by the width information on different devices is different; a height parameter, where the height parameter is used to represent height information of the functional module, and a number of screen grids occupied by the height information on different devices is different; an area position parameter, where the area position parameter is used to represent a position of the functional module on the screen, and the area position parameter includes a left area, a right area, a top area, a bottom area, and a full screen area; a sequential layout parameter, where the sequential layout parameter is used to determine whether to perform layout in a preset order; and a self-adaptive parameter, where the self-adaptive parameter is used to determine whether the functional module adapts to the screen.

In an embodiment, the display unit lays out the functional module on the target device according to the number of grids that matches the configuration parameter in a following manner: in response to detecting that the configuration parameter includes a sequential layout parameter, laying out the functional module on the target device according to the number of grids that matches the configuration parameter following an order preset by the sequential layout parameter.

In an embodiment, the display unit lays out the functional module on the target device according to the number of grids that matches the configuration parameter in a following manner: in response to detecting that no sequential layout parameter is included in the configuration parameter, and the configuration parameter includes an area position parameter; determining a position of the functional module on the screen of the target device based on a width parameter, a height parameter, the area position parameter and a self-adaptive parameter, and laying out the functional module on the target device according to the number of grids of the configuration parameter.

In an embodiment, the display unit lays out the functional module on the target device according to the number of grids that matches the configuration parameter in a following manner: in response to detecting that no sequential layout parameter is included in the configuration parameter, and that no area position parameter is included in the configuration parameter; determining a position of the functional module on the screen of the target device based on a width parameter, a height parameter and a self-adaptive parameter, and laying out the functional module on the target device according to the number of grids of the configuration parameter.

Regarding the apparatus in the above embodiments, the specific manners in which each module performs operations have been described in detail in the embodiments related to the method, and will not be elaborated herein.

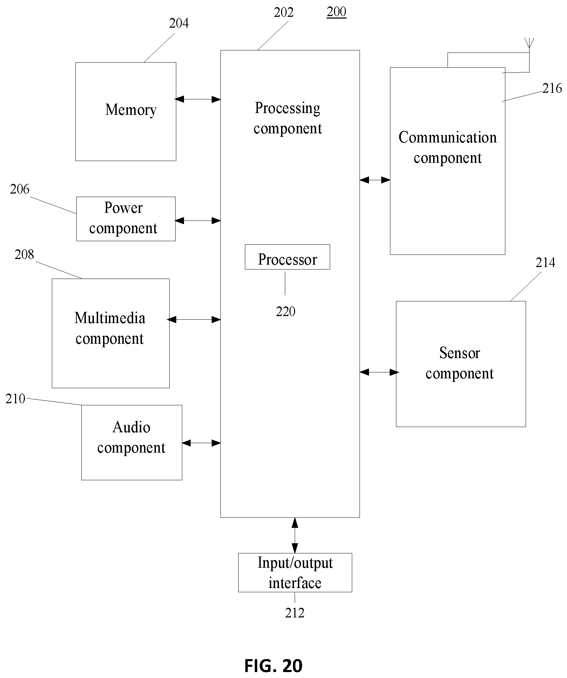

FIG. 20 is a block diagram for an apparatus 200 shown according to an exemplary embodiment. The apparatus 200 may be provided as a terminal. For example, the apparatus 200 may be a mobile phone, a computer, a digital broadcast terminal device, a messaging device, a gaming console, a tablet, a medical device, an exercise device, a personal digital assistant, and the like.

Referring to FIG. 20, the apparatus 200 may include one or more of the following components: a processing component 202, a memory 204, a power component 206, a multimedia component 208, an audio component 210, an input/output (I/O) interface 212, a sensor component 214, and a communication component 216.

The processing component 202 typically controls the overall operation of the apparatus 200, such as operations associated with display, telephone calls, data communications, camera operations, and recording operations. Processing component 202 may include one or more processors 220 to execute instructions and complete all or part of the steps of the above-described methods. Moreover, the processing component 202 may include one or more modules that facilitate the interaction between the processing component 202 and other components. For example, the processing component 202 may include a multimedia module to facilitate the interaction between the multimedia component 208 and the processing component 202.

The memory 204 is configured to store various types of data to support the operation on the apparatus 200. Examples of such data include instructions for any applications or methods operated on the apparatus 200, contact data, phonebook data, messages, pictures, videos, etc. The memory 204 may be implemented by any type of volatile or non-volatile memory devices or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 206 provides power to various components of the apparatus 200. The power component 206 may include a power management system, one or more power sources, and any other components associated with generating, managing, and distributing power to the apparatus 200.

The multimedia component 208 includes a screen providing an output interface between the apparatus 200 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also detect a duration and a pressure associated with the touch or swipe operation. In some embodiments, the multimedia component 208 includes a front camera and/or a rear camera. The front camera and/or the rear camera may receive external multimedia data while the apparatus 200 is in an operation mode, such as a photographing mode or a video mode. Each of the front camera and the rear camera may be a fixed optical lens system or have focus and optical zoom capability.

The audio component 210 is configured to output and/or input audio signals. For example, the audio component 210 includes a microphone (MIC) configured to receive an external audio signal when the apparatus 200 is in an operation mode, such as a call mode, a recording mode, and a voice recognition mode. The received audio signal may be further stored in the memory 204 or transmitted via the communication component 216. In some embodiments, the audio component 210 further includes a speaker to output audio signals.

The I/O interface 212 provides an interface between the processing component 202 and peripheral interface modules, which may be a keyboard, a click wheel, buttons, and the like. The buttons may include, but are not limited to, a home button, a volume button, a starting button, and a locking button.

The sensor component 214 includes one or more sensors to provide status assessments of various aspects of the apparatus 200. For example, the sensor component 214 may detect an open/closed status of the apparatus 200, relative positioning of components, e.g., the display and the keypad, of the apparatus 200, a change in position of the apparatus 200 or a component of the apparatus 200, a presence or absence of user contact with the apparatus 200, an orientation or an acceleration/deceleration of the apparatus 200, and a change in temperature of the apparatus 200. The sensor component 214 may include a proximity sensor configured to detect the presence of nearby objects without any physical contact. The sensor component 214 may also include a light sensor, such as a CMOS or CCD image sensor, for use in imaging applications. In some embodiments, the sensor component 214 may also include an acceleration sensor, a gyroscope sensor, a magnetic sensor, a pressure sensor, or a temperature sensor.

The communication component 216 is configured to facilitate communication between the apparatus 200 and other devices in a wired or wireless manner. The apparatus 800 can access a wireless network based on a communication standard, such as WiFi, 2G or 3G, or a combination thereof. In one exemplary embodiment, the communication component 216 receives a broadcast signal or broadcast associated information from an external broadcast management system via a broadcast channel. In one exemplary embodiment, the communication component 216 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an exemplary embodiment, the apparatus 200 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In an exemplary embodiment, a non-transitory computer-readable storage medium including instructions is also provided, such as a memory 204 including instructions. The aforementioned instructions are executable by a processor 220 in the apparatus 200, for completing the above methods. For example, the non-transitory computer-readable storage medium may be a ROM, a random access memory (RAM), a CD-ROM, a magnetic tape, a floppy disc, an optical data storage device, and the like.

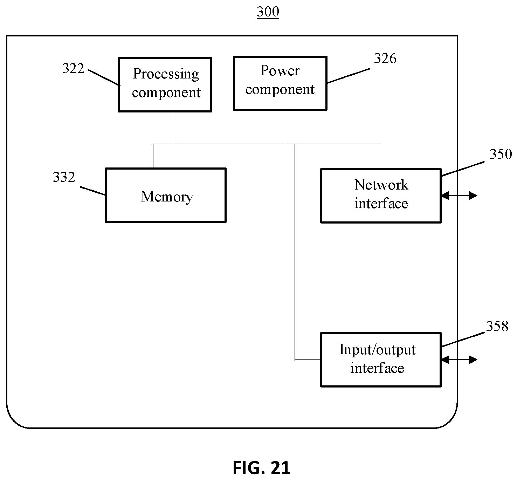

FIG. 21 is a block diagram of an apparatus 300 for application display shown according to an exemplary embodiment. For example, the apparatus 300 may be provided as a server. Referring to FIG. 21, the apparatus 300 includes a processing component 322, which further includes one or more processor, and a memory resource represented by a memory 332 for storing instructions, such as an application program, that may be executed by the processing component 322. The application program stored in the memory 332 may include one or more modules, each corresponding to a set of instructions. In addition, the processing component 322 is configured to execute instructions to perform any of the aforementioned methods applied to the base station.

The apparatus 300 may further include a power component 326 configured to perform power management of the apparatus 300, a wired or wireless network interface 350 configured to connect the apparatus 300 to the network, and an input/output (I/O) interface 358. The base station 900 may operate based on an operating system stored in the memory 932, such as a Windows Server^{™}, a Mac OS X^{™}, a Unix^{™,} a Linux^{™}, a Free BSD^{™} or the like.

The technical solutions provided by the embodiments of the present disclosure may include the following beneficial effects. The functional module(s) included in the target application running on the first device is determined, and the target device is determined based on the transfer parameter of the functional module, thus the automatic transfer of the functional module(s) is realized. After the functional module(s) is transferred to the target device, the functional module(s) is laid out on the target device based on the configuration parameter of the functional module(s), and the page(s) corresponding to the functional module(s) is displayed, so that different target devices can be adapted based on the configuration parameter of the functional module(s). It facilitates users to experience that the functional module(s) may be separated and combined between devices. At the same time, the reasonable display of functional module(s) enhances the user experience.

It may be understood that, in the present disclosure, "a plurality of" means two or more than two, and other quantifiers are similar thereto. "And/or" describes the association relationship of associated objects, which indicates that three relationships may exist. For example, A and/or B may represent: A exists alone, A and B exist at the same time, and B exists alone. The character "/" generally indicates that the associated objects before and after are in an "or" relationship. The singular forms of "a", "the" and "said" are also intended to include the plural forms, unless otherwise clearly indicated by the context.

It may be further understood that the terms "first", "second", etc. are used to describe various information, but such information should not be limited to these terms. These terms are only used to distinguish information of the same type from each other, and do not indicate a specific order or degree of importance. In fact, the expressions "first", "second", etc. can be used interchangeably. For example, without departing from the scope of the present disclosure, the first information can also be referred to as the second information, and similarly, the second information can also be referred to as the first information.

It may be further understood that the orientation or positional relationships indicated by the terms "center", "longitudinal", "lateral", "front", "rear", "upper", "lower", "left", "right", "vertical", "horizontal", "top", "bottom", "inside", "outside", etc., are based on the orientation or positional relationship shown in the accompanying drawings, and are merely for the convenience of describing the present embodiment and simplifying the description, rather than indicating or implying that the apparatus or element referred to must have a specific orientation, or be constructed and operated in the specific orientation.

It may be further understood that, unless otherwise specified, the term "connection" includes a direct connection between the two in the absence of other components, as well as an indirect connection between the two in the presence of other elements.

It may be further understood that, although the operations are described in a specific order in the drawings in the embodiments of the present disclosure, it should not be construed as requiring the operations to be performed in the specific order shown or in a sequential order, nor as requiring the execution of all the operations shown to obtain the desired result. In certain environments, multitasking and parallel processing may be advantageous.

Those skilled in the art will readily appreciate other implementation solutions of the present disclosure after considering the specification and practicing the disclosure disclosed herein. The present disclosure is intended to cover any variations, uses or adaptations of the present disclosure that follow the general principles of the present disclosure and include common knowledge or customary technical means in the art that are not disclosed in the present disclosure.

It should be understood that the present disclosure is not limited to the exact structures that have been described above and shown in the accompanying drawings, and various modifications and changes may be made without departing from the scope thereof. The scope of the present disclosure is limited only by the appended claims.

## Claims

1. A method for displaying a target application, the method comprising:
determining (S11) a functional module comprised in the target application running on a first device, wherein the functional module comprises one or more pages;
parsing (S12) a transfer parameter and a configuration parameter of the functional module, wherein the configuration parameter is used to represent display information of the functional module on a display screen of a corresponding device, and the transfer parameter is used to determine a target device to which the functional module is transferred correspondingly, wherein the target device comprises the first device and/or a second device different from the first device;
determining the target device to which the functional module is transferred correspondingly based on the transfer parameter of the functional module, and transferring the functional module to the target device (S13); and
laying out the functional module on the target device to which the functional module is transferred correspondingly based on the configuration parameter of the functional module, and displaying the one or more pages in the functional module (S14).

2. The method according to claim 1, wherein determining the target device to which the functional module is transferred correspondingly based on the transfer parameter of the functional module comprises:
in response to the transfer parameter being a first parameter, the first parameter representing that the one or more pages in the functional module remain to be displayed on the first device and are not transferred to a device other than the first device for displaying, determining the first device as the target device.

3. The method according to claim 1 or 2, wherein determining the target device to which the functional module is transferred correspondingly based on the transfer parameter of the functional module comprises:
in response to the transfer parameter being a second parameter, the second parameter representing that the one or more pages in the functional module are transferred and displayed following a device to which a previous transferred and displayed functional module is transferred, determining the device to which the previous transferred functional module in the target application is transferred as the target device, wherein the target application corresponds to a plurality of functional modules arranged in sequence for transferring and displaying.

4. The method according to any one of the preceding claims, wherein determining the target device to which the functional module is transferred correspondingly based on the transfer parameter of the functional module comprises:
in response to the transfer parameter being a third parameter, the third parameter representing that the one or more pages in the functional module are preferentially transferred to another device for transferring and displaying, and exclusively occupy the transferred device, selecting the second device different from the first device as the target device.

5. The method according to any one of the preceding claims , wherein determining the target device to which the functional module is transferred correspondingly based on the transfer parameter of the functional module comprises:
in response to the transfer parameter being a fourth parameter, the fourth parameter representing that the one or more pages in the functional module are transferred to another device for displaying and no longer continue to be transferred, selecting the second device different from the first device as the target device.

6. The method according to any one of the preceding claims , wherein laying out the functional module on the target device to which the functional module is transferred correspondingly based on the configuration parameter of the functional module comprises:
determining (S21) a screen width parameter of the target device;
dividing (S22) a screen of the target device into grids based on the screen width parameter, wherein numbers of grids corresponding to target devices with different screen width parameters are different;
determining (S23) a number of grids of the functional module on the target device that matches the configuration parameter based on a number of grids of the target device and the configuration parameter of the functional module, wherein the configuration parameter of the functional module comprises a preset number of grids; and
laying out (S24) the functional module on the target device according to the number of grids that matches the configuration parameter.

7. The method according to claim 6, wherein the configuration parameter comprises at least one of following parameters:
a width parameter, configured to represent width information of the functional module, wherein a number of grids of a screen occupied by the width information on different devices is different;
a height parameter, configured to represent height information of the functional module, wherein a number of grids of a screen occupied by the height information on different devices is different;
an area position parameter, configured to represent a position of the functional module on the screen, wherein the area position parameter comprises a left area, a right area, a top area, a bottom area, and a full screen area;
a sequential layout parameter, configured to determine whether to perform layout according to a preset sequence; and
a self-adaptive parameter, configured to determine whether the functional module is self-adaptive to the screen.

8. The method according to claim 6 or 7, wherein laying out (S24) the functional module on the target device according to the number of grids that matches the configuration parameter comprises:
in response to detecting that the configuration parameter comprises a sequential layout parameter, laying out the functional module on the target device according to the number of grids that matches the configuration parameter according to a sequence preset by the sequential layout parameter.

9. The method according to claim 6 or 7, wherein laying out (S24) the functional module on the target device according to the number of grids that matches the configuration parameter comprises:
in response to detecting that no sequential layout parameter is comprised in the configuration parameter, and that an area position parameter is comprised in the configuration parameter, determining a position of the functional module on the screen of the target device based on a width parameter, a height parameter, the area position parameter and a self-adaptive parameter, and laying out the functional module on the target device according to the number of grids that matches the configuration parameter.

10. The method according to claim 6 or 7, wherein laying out (S24) the functional module on the target device according to the number of grids that matches the configuration parameter comprises:
in response to detecting that no sequential layout parameter is comprised in the configuration parameter, and that no area position parameter is comprised in the configuration parameter, determining a position of the functional module on the screen of the target device based on a width parameter, a height parameter and a self-adaptive parameter, and laying out the functional module on the target device according to the number of grids that matches the configuration parameter.

11. An apparatus (100) for displaying a target application, the apparatus (100) comprising:
a determination unit (101), configured to determine a functional module comprised in the target application running on a first device, wherein the functional module comprises one or more pages; and determine a target device to which the functional module is transferred correspondingly based on a transfer parameter of the functional module and transfer the functional module to the target device;
a parsing unit (102), configured to parse the transfer parameter and a configuration parameter of the functional module, wherein the configuration parameter is used to represent display information of the functional module on a display screen of a corresponding device, and the transfer parameter is used to determine the target device to which the functional module is transferred correspondingly, wherein the target device comprises the first device and/or a second device different from the first device; and
a display unit (103), configured to lay out the functional module on the target device to which the functional module is transferred correspondingly based on the configuration parameter of the functional module, and display the one or more pages in the functional module.

12. The apparatus (100) according to claim 11, wherein the determination unit (101) is further configured to:
in response to the transfer parameter being a first parameter, the first parameter representing that the one or more pages in the functional module remain to be displayed on the first device and are not transferred to a device other than the first device for displaying, determine the first device as the target device.

13. The apparatus (100) according to claim 11 or 12, wherein the determination unit (101) is further configured to:
in response to the transfer parameter being a second parameter, the second parameter representing that the one or more pages in the functional module are transferred and displayed following a device to which a previous transferred and displayed functional module is transferred, determine the device to which the previous transferred functional module in the target application is transferred as the target device, wherein the target application corresponds to a plurality of functional modules arranged in sequence for transferring and displaying.

14. The apparatus (100) according to any one of claims 11 to 13, wherein the determination unit (101) is further configured to:
in response to the transfer parameter being a third parameter, the third parameter representing that the one or more pages in the functional module are preferentially transferred to another device for transferring and displaying, and exclusively occupy the transferred device, select the second device different from the first device as the target device.

15. The apparatus (100) according to any one of claims 11 to 14, wherein the determination unit (101) is further configured to:
in response to the transfer parameter being a fourth parameter, the fourth parameter representing that the one or more pages in the functional module are transferred to another device for displaying and no longer continue to be transferred, select the second device different from the first device as the target device.
